# EUROPEAN PATENT APPLICATION

(11) **EP 4 672 451 A1**
(43) Date of publication of application: **31.12.2025**
(21) Application number: 24894438.1
(22) Date of filing: 31.10.2024
(51) Int. Cl.: H01M 50/184, H01M 50/102, H01M 50/244

(54) **DETACHABLE BATTERY PACK**

(30) Priority: 20.11.2023 KR 20230160908
(71) Applicant: LG Energy Solution, Ltd., Seoul 07335 (KR)
(72) Inventor: YOO, Chi Gohn, Daejeon 34122 (KR); JANG, Jae Young, Daejeon 34122 (KR); SON, Hyuk Joon, Daejeon 34122 (KR)
(74) Representative: Plasseraud IP
(86) International application number: PCT/KR2024/016890
(87) International publication number: WO 2025/110544

(57) **Abstract**

Disclosed is a battery pack including an electrode assembly, an electrode lead extending from the electrode assembly, and a battery case including a receiving portion configured to receive the electrode assembly and a sealed portion sealed along the edge of the receiving portion, wherein a part of the sealed portion extends to form a handle portion.

## Description

### [Technical Field]

This application claims the benefit of priority to Korean Patent Application No. 2023-0160908 filed on November 20, 2023, the disclosure of which is incorporated herein by reference in its entirety.

The present invention relates to a battery pack, and more particularly to a removable battery pack.

### [Background Art]

With technological development of mobile devices and an increase in demand therefore, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

In recent years, there is a need for a design that allows consumers to easily replace battery packs due to the right to repair of IT products in Europe, the United States, and the like.

Conventionally, a lifting film for battery packs is additionally manufactured and an adhesive is applied to the lifting film, which requires additional materials and processes and increases the manufacturing cost.

### (Prior Art Document)

(Patent Document 1) Korean Patent Application Publication No. 10-2022-0110994

### [Disclosure]

### [Technical Problem]

The present invention has been made in view of the above problems, and it is an object of the present invention to provide a battery pack that is removable from a product.

### [Technical Solution]

As a technical means for achieving the above object, a battery pack according to an embodiment of the present invention includes an electrode assembly, an electrode lead (110) extending from the electrode assembly, and a battery case (120) including a receiving portion (121) configured to receive the electrode assembly and a sealed portion (122) sealed along an edge of the receiving portion (121), wherein a part of the sealed portion (122) extends to form a handle portion (130).

Also, in the battery pack according to the embodiment of the present invention, an outer surface of the receiving portion (121) may be coated with an adhesive.

Also, in the battery pack according to the embodiment of the present invention, the handle portion (130) may include a first handle portion (131) extending from the sealed portion (122), the first handle portion being attached to one surface of the receiving portion (121).

Also, in the battery pack according to the embodiment of the present invention, the first handle portion (131) may be coated with an adhesive.

Also, in the battery pack according to the embodiment of the present invention, a first edge (131a) of the first handle portion (131) may not be coated with the adhesive.

Also, in the battery pack according to the embodiment of the present invention, the first edge (131a) of the first handle portion (131) may be coated with a pressure-sensitive adhesive.

Also, in the battery pack according to the embodiment of the present invention, the receiving portion (121) may include a region of the one surface of the receiving portion to which the first handle portion (131) is attached, the region of the one surface of the receiving portion having a first engraved recess (121a) in a shape corresponding to the first handle portion (131).

Also, in the battery pack according to the embodiment of the present invention, the handle portion (130) may include a second handle portion (132) extending from the sealed portion (122), the second handle portion being attached to the other surface of the receiving portion (121).

Also, in the battery pack according to the embodiment of the present invention, the second handle portion (132) may be coated with an adhesive.

Also, in the battery pack according to the embodiment of the present invention, a second edge (132a) of the second handle portion (132) may not be coated with the adhesive.

Also, in the battery pack according to the embodiment of the present invention, the second edge (132a) of the second handle portion (132) may not be coated with the adhesive.

Also, in the battery pack according to the embodiment of the present invention, the receiving portion (121) may include a region of the other surface thereof to which the second handle portion (132) is attached with a second engraved recess (121b) formed in a shape corresponding to the second handle portion (132).

In addition, the battery pack according to the embodiment of the present invention may be configured to be attachable to a product (200).

In addition, the battery pack according to the embodiment of the present invention may be configured to be removable from the product (200) using the handle portion (130).

### [Advantageous Effects]

As is apparent from the above description, it is possible to remove a battery pack according to the present invention from a product by pulling the battery pack from the product using a handle portion extending from a sealed portion.

### [Description of Drawings]

FIG. 1 is a perspective view illustrating a battery pack according to a first embodiment of the present invention.
FIG. 2 is a plan view illustrating the battery pack according to the first embodiment of the present invention.
FIG. 3 is a sectional view illustrating the battery pack according to the first embodiment of the present invention.
FIG. 4 is a sectional view illustrating a battery pack according to a second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack according to the present invention (hereinafter referred to as "the present battery pack") will be described.

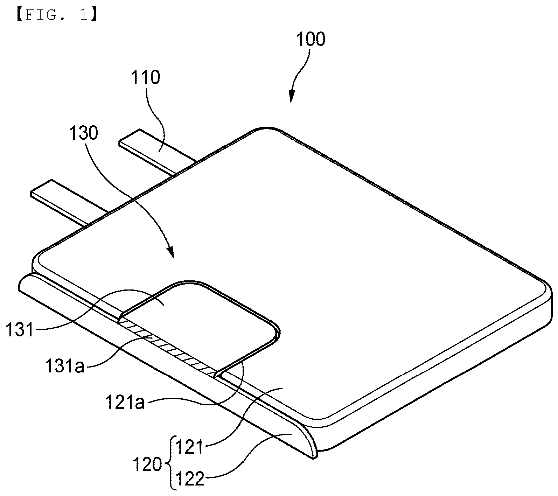

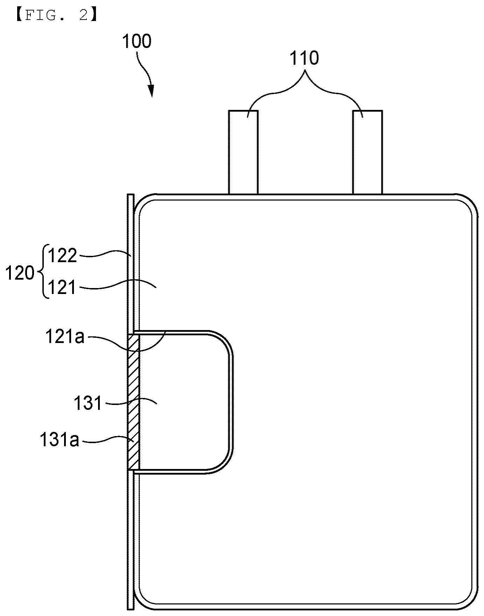

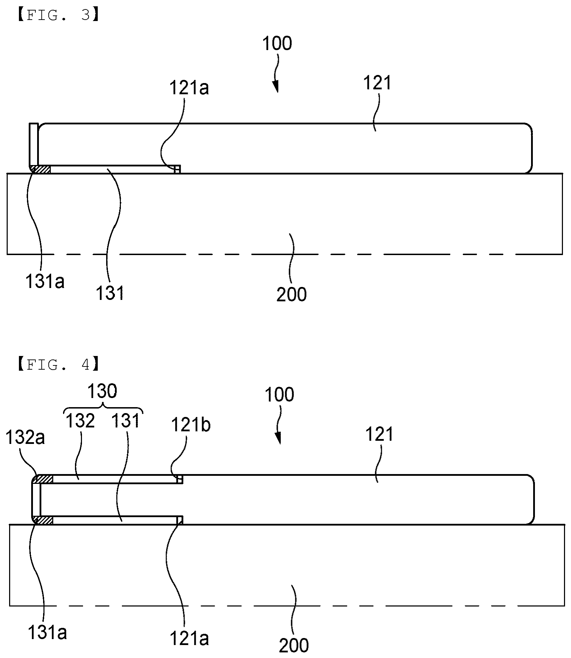

FIG. 1 is a perspective view illustrating a battery pack according to a first embodiment of the present invention, FIG. 2 is a plan view illustrating the battery pack according to the first embodiment of the present invention, and FIG. 3 is a sectional view illustrating the battery pack according to the first embodiment of the present invention.

First, describing the battery pack according to the first embodiment of the present invention with reference to FIGs. 1 to 3, the present battery pack 100 includes an electrode assembly (not shown), an electrode lead 110, a battery case 120, and a handle portion 130.

The electrode assembly (not shown) may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other. However, the present invention is not limited thereto.

The positive electrode includes a positive electrode current collector and a positive electrode active material applied to each of an upper surface and a lower surface of the positive electrode current collector.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

Meanwhile, the positive electrode active material may be mixed with a conductive agent and a binder, and a filler may be further added as needed.

The negative electrode includes a negative electrode current collector and a negative electrode active material applied to each of an upper surface and a lower surface of the negative electrode current collector.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

In addition, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

Of course, the negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The electrode lead 110 may extend from the electrode assembly (not shown), and a sealed portion 122 may be sealed by thermal fusion using a sealing tool in the state in which the electrode lead is exposed to the outside of the sealed portion 122.

In addition, the battery case 120 may include a receiving portion 121 configured to receive the electrode assembly (not shown) and a sealed portion 122 that is sealed along the edge of the receiving portion 121.

The battery case 120 may be made of a laminate sheet including an outer covering layer, a metal layer, and an inner covering layer, and the receiving portion 121 and a gas pocket portion may be formed in the battery case.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability. However, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

An outer surface of the receiving portion 121 of the battery case 120 may be coated with an adhesive. Accordingly, the receiving portion 121 may be attached to a product 200.

Here, the adhesive may be, but is not limited to, a double-sided tape having double-sided adhesion, and may be any adhesive that will be apparent to those skilled in the art.

The handle portion 130 may be formed as a result of extension of a part of the sealed portion 122. The handle portion 130 may include a first handle portion 131 that extends from the sealed portion 122 and is attached to one surface of the receiving portion 121. In FIG. 3, one surface of the receiving portion 121 may be a lower surface (6 o'clock position).

For example, the first handle portion 131 may be formed by removing the part of the sealed portion 122 that is sealed along the edge of the receiving portion 121 and that is located on the side other than a central part.

The first handle portion 131 may be attached to the outer surface of the receiving portion 121 by the adhesive coated on the outer surface of the receiving portion.

The receiving portion 121 may be provided in a region of one surface thereof to which the first handle portion 131 is attached with a first engraved recess 121a formed in a shape corresponding to the first handle portion 131.

In other words, the first recess 121a may be formed as a result of one surface of the first handle portion 131 being depressed in a shape corresponding to the first handle portion 131.

Here, forming the first recess 121a in a shape of the first handle portion 131 may mean that the shape in the plane of the first recess 121a corresponds to the shape in the plane of the first handle portion 131 and the height of the depression of the first recess 121a is formed so as to correspond to the thickness of the first handle portion 131.

In this case, the first recess 121a may be shaped so as to correspond to the size of the first handle portion 131 such that the first handle portion 131 can be seated therein, or may be shaped such that a clearance space is formed considering manufacturing error and interference mitigation.

Meanwhile, the first handle portion 131 may be coated with an adhesive. In addition, a first edge 131a of the first handle portion 131 may not be coated with an adhesive, or may be coated with a pressure-sensitive adhesive. Here, the pressure-sensitive adhesive is an adhesive having lower adhesive force than the adhesive.

For example, the first edge 131a may be a region of the first handle portion 131 that is located closest to the sealed portion 122.

Referring to FIG. 3, the present battery pack 100 may be attached to a product 200. For example, the product 200 may be a mobile phone; however, the present invention is not limited thereto, and it is preferred that the product 200 be understood to encompass all types of electronic devices in which the battery pack 100 is used.

The present battery pack 100 may be attached to the product 200 via the adhesive coated on the outer surface of the receiving portion 121.

In addition, the present battery pack 100 may be removed from the product 200 using the handle portion 130.

For example, the present battery pack 100 attached to the product 200 through the outer surface of the receiving portion 121 may be removed from the product 200 by a user gripping the first handle portion 131 at the first edge 131a of the first handle portion 131 that is coated with no adhesive or is coated with the pressure-sensitive adhesive.

FIG. 4 is a sectional view illustrating a battery pack according to a second embodiment of the present invention.

Hereinafter, the battery pack according to the second embodiment of the present invention will be described with reference to FIG. 4. Referring to FIG. 4, the battery pack according to the second embodiment of the present invention is identical to the battery pack according to the first embodiment except for the configuration of the handle portion 130, and therefore only the different configuration will be described.

The handle portion 130 of the battery pack 100 according to the second embodiment of the present invention may include the first handle portion 131 and a second handle portion 132.

The second handle portion 132 may extend from a sealed portion 122 and may be attached to the other surface of a receiving portion 121. In FIG. 5, the other surface of the receiving portion 121 may be an upper surface (12 o'clock position).

For example, the first handle portion 131 may be attached to one surface of the receiving portion 121, and the second handle portion 132 may be attached to the other surface of the receiving portion 121, wherein the second handle portion 132 may be formed so as to be disposed at the position corresponding to the first handle portion 131. That is, the second handle portion 132 may be attached to a central part of one side of the other surface of the receiving portion 121.

In addition, the second handle portion 132 may be attached to an outer surface of the receiving portion 121 via an adhesive coated on the outer surface of the receiving portion.

In addition, the receiving portion 121 may be provided in a region of the other surface thereof to which the second handle portion 132 is attached with a second engraved recess 121b formed in a shape corresponding to the second handle portion 132.

In other words, the second recess 121b may be formed as a result of the other surface of the second handle portion 131 being depressed in a shape corresponding to the second handle portion 132.

Here, forming the second recess 121b in a shape of the second handle portion 132 may mean that the shape in the plane of the second recess 121b corresponds to the shape in the plane of the second handle portion 132 and the height of the depression of the second recess 121b is formed so as to correspond to the thickness of the second handle portion 132.

In this case, the second recess 121b may be shaped so as to correspond to the size of the second handle portion 132 such that the second handle portion 132 can be seated therein, or may be shaped such that a clearance space is formed considering manufacturing error and interference mitigation.

Meanwhile, the second handle portion 132 may be coated with an adhesive. In addition, a second edge 132a of the second handle portion 132 may not be coated with an adhesive, or may be coated with a pressure-sensitive adhesive.

For example, the second edge 132a may be a region of the second handle portion 132 that is located closest to the sealed portion 122.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Battery pack
110: Electrode lead
120: Battery case
121: Receiving portion
121a: First recess 121b: Second recess
122: Sealed portion
130: Handle portion
131: First handle portion 131a: First edge
132: Second handle portion 132a: Second edge
200: Product

## Claims

1. A battery pack comprising:
an electrode assembly;
an electrode lead extending from the electrode assembly; and
a battery case including:
a receiving portion configured to receive the electrode assembly; and
a sealed portion sealed along an edge of the receiving portion, wherein a part of the sealed portion extends to form a handle portion.

2. The battery pack according to claim 1, wherein an outer surface of the receiving portion is coated with an adhesive.

3. The battery pack according to claim 2, wherein the handle portion comprises a first handle portion extending from the sealed portion, the first handle portion being attached to one surface of the receiving portion.

4. The battery pack according to claim 3, wherein the first handle portion is coated with an adhesive.

5. The battery pack according to claim 4, wherein a first edge of the first handle portion is not coated with the adhesive.

6. The battery pack according to claim 4, wherein a first edge of the first handle portion is coated with a pressure-sensitive adhesive.

7. The battery pack according to claim 3, wherein the receiving portion includes a region of the one surface of the receiving portion to which the first handle portion is attached, the region of the one surface of the receiving portion having a first engraved recess in a shape corresponding to the first handle portion.

8. The battery pack according to claim 3, wherein the handle portion comprises a second handle portion extending from the sealed portion, the second handle portion being attached to the other surface of the receiving portion.

9. The battery pack according to claim 8, wherein the second handle portion is coated with an adhesive.

10. The battery pack according to claim 9, wherein a second edge of the second handle portion is not coated with the adhesive.

11. The battery pack according to claim 9, wherein a second edge of the second handle portion is not coated with the adhesive.

12. The battery pack according to claim 8, wherein the receiving portion includes a region of the other surface thereof to which the second handle portion is attached with a second engraved recess formed in a shape corresponding to the second handle portion.

13. The battery pack according to claim 3, wherein the battery pack is configured to be attachable to a product.

14. The battery pack according to claim 3, wherein the battery pack is configured to be removable from a product using the handle portion.
